# EUROPEAN PATENT SPECIFICATION

(11) **EP 0 399 615 B1**
(45) Date of publication and mention of the grant of the patent: **27.07.1994**
(21) Application number: 90201296.2
(22) Date of filing: 23.05.1990
(51) Int. Cl.: B62K 25/00

(54) **Improved bicycle**
Fahrrad
Bicyclette

(30) Priority: 25.05.1989 NL 8901318
(43) Date of publication of application: 28.11.1990
(73) Proprietor: Meijers, Marinus Johannes, NL-9711 RR Groningen (NL); Gerritsen, Marten Simon, NL-9605 PD Kiel Windeweer (NL)
(72) Inventor: Meijers, Marinus Johannes, NL-9711 RR Groningen (NL); Gerritsen, Marten Simon, NL-9605 PD Kiel Windeweer (NL)

(56) References cited:
- EP-A- 0 279 763
- WO-A-88/02076
- DE-B- 1 120 300
- GB-A- 1 205 286
- GB-A- 2 015 949
- US-A- 4 789 174

## Description

The invention relates to a bicycle according to the preamble of claim 1.

A bicycle of this type is known from US-A-4 789 174. In this bicycle, the tendency of the rear wheel suspension to absorb pedal forces through upward movement of the wheel due to rotational force applied to the wheel, is neutralized to prevent reactions in the suspension due to varying forces in the driveline.

A problem of this known bicycle is, that oscillating masses of the pedaling person causes oscillating wheel travel of the rear wheel.

Motorcycles usually are equiped with suspended wheels, but these suspension systems cannot be applied succesfully to bicycles. First of all the ratios between vehicle weight and weight fully laden differ. Ratios vary from 5:1 for a heavy motorcycle to 1:7 for a bicycle. When applied to a bicycle, the suspension systems as used in motorcycles require a mechanism for adjustments to compensate for the difference in weight of light and heavy riders. Secondly the suspension systems for motorcycles do not take into account the method of propulsion characteristic for a bicycle, with heavy legs going up and down, which will cause considerable travel of the suspension by itself. This impairs efficiency, comfort and roadholding. Thirdly motorcycle suspension systems will be heavy and are characterized by large amounts of friction.
Lighter weight constructions for bicycle suspension systems are known from British patent 907467 and the Dutch patent application no. 7711647 published on April 2, 1975. These constructions show attempts by their designers to keep the chain length constant irrespective of wheel travel, or show attempts to prevent reactions in the suspension due to varying forces in the driveline. Oscillations in the vertical plane due to oscillating masses (made up mainly by the legs of the rider) are either not opposed or are reduced by excessively stiff springs, possibly in combination with friction damping and/or internal damping in the springing medium itself.

It is an object of the present invention to provide a bicycle in which oscillating wheel travel of the rear wheel caused by oscillating masses of the pedaling person is countered.

According to the present invention, this object is achieved by providing a bicycle according of the type identified in the preamble with the characterizing features of claim 1.

Since the rear wheel of the bicycle according to the present invention is pivotable upon an axis above the upper portion of the drive chain or belt, when driving the bicycle, oscillating masses of the pedaling person are countered by oscillating forces urging the rear wheel in rebound.

With a suspension system arranged according to this invention a softer spring can be used than was previously practical, which improves ride comfort without causing unwanted excitations of the suspension.

Preferably a springing material is employed with zero damping in combination with a viscous damper, the spring being made out of synthetic material and in a specific shape. The spring is tailored to obtain the required spring characteristics in a simple and economical way. The characteristics are chosen to enable the handling of a wide range in weight without the need for adjustments, and without impairing the handling or the improvements in ride quality.

Preferably the spring employed is made up out of a polyurethane foam with a closed cell structure, which could be mounted over the piston rod of the damper unit.

The invention will be described by way of example with reference to the accompanying drawings.

In the drawings:
Figure 1 is a side view showing a bicycle according to the invention;
Figure 2 shows the front fork assembly in front and side view, and
Figure 3 shows the rear suspension.

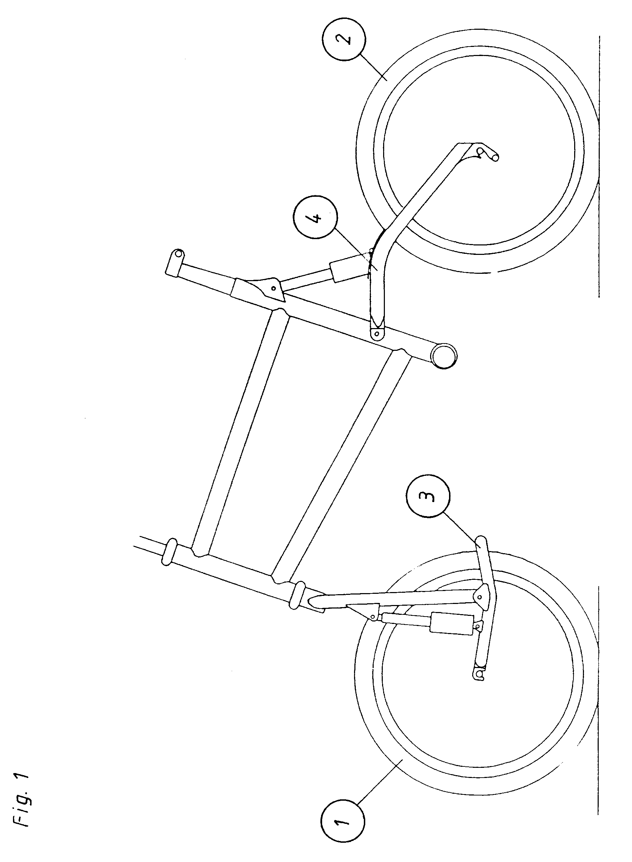

Referring to Figure 1, the bicycle is equipped with smaller wheels 1 and 2 than usual; larger wheels are, given the suspension, deemed unnecessary. Smaller wheels have a lower moment of inertia and save weight in the construction of the trailing arms 3 and 4.

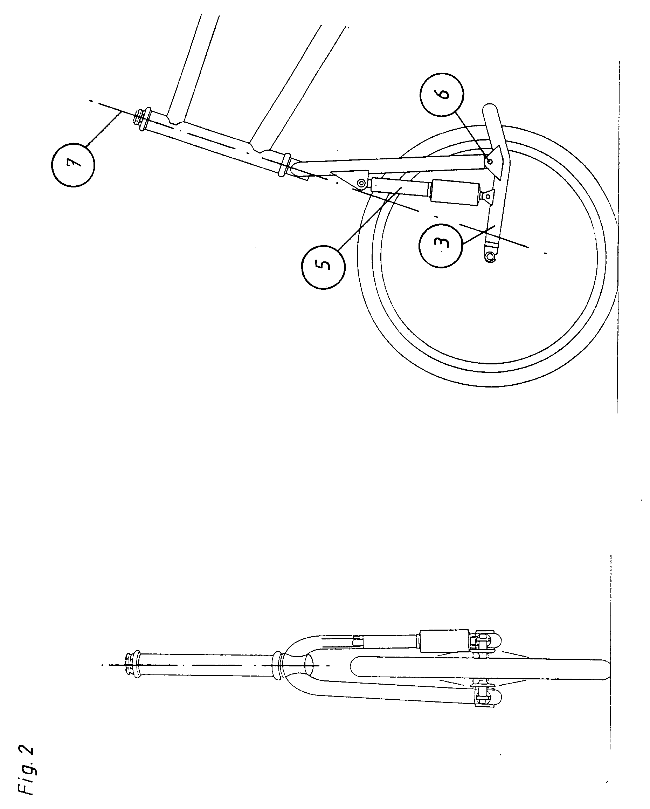

The front suspension in Figure 2 is constructed as a leading swingarm 3 with a single side-mounted spring-damper combination 5. The location of the spring unit 5 and the pivot point 6 is chosen as to minimize the moment of inertia on the steering axis 7. The ratio between spring deflection and wheel travel also reduces the influence of the friction caused by the damper seal.

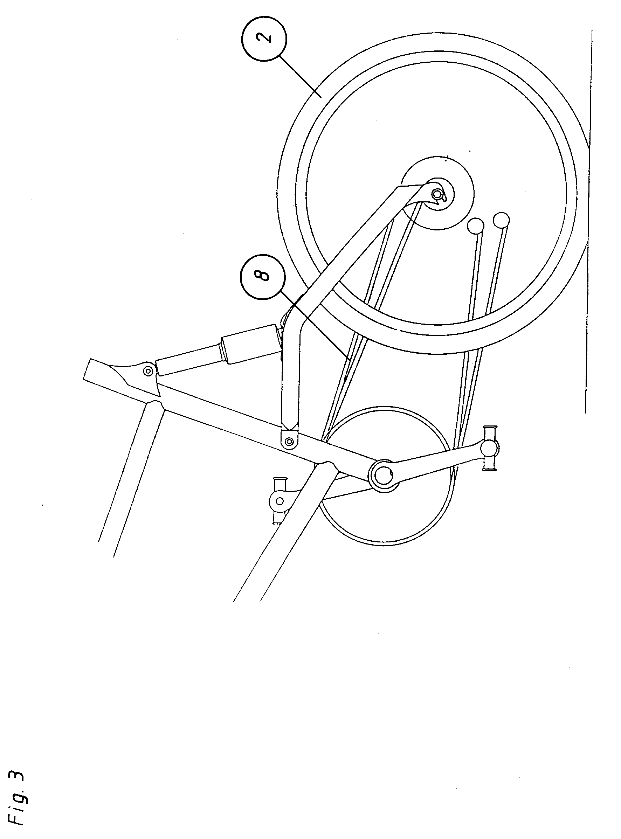

The rear fork in Figure 3 features a geometry that will cause the rearwheel 2 to go into rebound by increasing the tension in chain 8. A further advantage of the construction shown is that an endless chain or drivebelt can be used. With a suitably designed chain tensioner the chain can be removed without parting a link.

The invention meets the goals for increasing ride comfort without impairing the efficiency of propulsion, by combining shaped synthetic springs with viscous dampers and a special geometry of the suspension of the driven wheel.

The resultant improvements in ride quality of the pedal cycle are largely uninfluenced by variations in rider weight and show negligible energy dissipation. These favourable characteristics are combined with low weight, low cost and only a minimal increase in complexity.

## Claims

1. Bicycle comprising a frame and a spring suspension (4) in which a driven rear wheel (2) is suspended allowing wheel travel with a vertical component with respect to said frame, said wheel (2) being connected to pedals via a driveline (8) comprising a drive chain or belt (8) for driving the rear wheel (2), in which, said suspension comprises a swing arm (4), and in which said suspension (4) in combination with said driveline (8) provides forces influencing said wheel travel in response to tension in the drive chain or belt (8), **characterized in that**, the rear wheel (2) is suspended at the free end of the swing arm (4) and the swing arm (4) is pivotably connected to the frame above the upper portion of the drive chain or belt (8), such that, in response to an increase in tension in the drive chain or belt (8), said suspension (4) in combination with said driveline (8) urges said wheel (2) in rebound for countering upward wheel travel caused by oscillating masses such as legs of the rider.

2. Bicycle according to claim 1, characterized by a front suspension comprising a U-shaped swing arm (3) having legs extending at each side of the front wheel and a spring damper unit mounted at one side of the front wheel (1) and connected to one of said legs.

3. Bicycle according to claim 1 or 2, characterized in that at least one of the suspensions comprises a spring of synthetic material with a foam structure.

4. Bicycle according to claim 3, characterized in that the synthetic material with a foam structure is a polyurethane with a closed cell structure.

## Patentansprüche

1. Fahrrad, bestehend aus einem Rahmen und einer federnden Radaufhängung (4), wobei das angetriebene Hinterrad (2) auf solche Weise angebracht ist, daß es hinsichtlich des Rahmens vertikal beweglich ist, wobei das Rad (2) mit den Pedalen durch einen Antriebriemen (8) zum Antrieb des Hinterrades (2) verbunden ist, bestehend aus einer Kette oder einem Riemen (8), wobei die Radaufhängung aus einem Schwingarm (4) besteht, und wobei die durch die Radaufhängung (4) in Kombination mit dem Antreibriemen (8) ausgeübten Kräfte die Radeinfederung als Reaktion auf die Spannung in der Kette oder dem Riemen (8) beeinflussen, dadurch gekennzeichnet, daß das Hinterrad (2) am freien Ende eines Schwingarms (4) befestigt ist, und wobei der Schwingarm drehbar am Rahmen über dem obersten Teil der Kette oder des Riemens (8) befestigt ist, und zwar in einer derartigen Weise, daß bei einer Erhöhung der Spannung in der Kette oder im Riemen (8) die Radaufhängung (4) in Kombination mit dem Antreibriemen (8) das Rad (2) ausfedern läßt, um die Einfederung zu verhindern, die durch die oszillierende Masse, wie die Beine des Radfahrers, verursacht wird.

2. Fahrrad nach Anspruch 1, dadurch gekennzeichnet, daß die Vorderradaufhängung aus einem U-förmigen Schwingarm (3) besteht, mit Schenkeln an beiden Seiten des Vorderrads und einer Feder-Dämpfer-Kombination, die neben dem Vorderrad montiert und mit einem der Schenkel verbunden ist.

3. Fahrrad nach Anspruch 1 oder 2, dadurch gekennzeichnet, daß mindenstens eines der Federelemente aus einer Feder aus synthetischem Material mit einer Schaumstruktur besteht.

4. Fahrrad nach Anspruch 3, dadurch gekennzeichnet, daß das synthetische Material mit einer Schaumstruktur ein Polyurethan mit geschlossener Zellstruktur ist.

## Revendications

1. Bicyclette composée d'un cadre et d'une suspension à roues à ressort (4), dont la propulsion arrière (2) est appliquée de façon à bouger verticalement par rapport au cadre, dont la roue (2) est reliée aux pédales par une ligne de transmission (8) composée d'une chaîne ou d'une courroie (8) afin de propulser la roue arrière (2), dont la suspension à roues comprend un culbuteur (4) et dont la force produite par la suspension à roues (4) en combinaison avec la ligne de transmission (8) influencent la contraction de la roue en réaction à la tension de la chaîne ou de la courroie (8), caractérisé par le fait que la roue arrière (2) est fixée à l'embout libre d'un culbuteur (4) et dont le culbuteur tournant est fixé au cadre au-dessus de la partie supérieure de la chaîne ou de la courroie (8), de sorte que lors d'une augmentation de la tension de la chaîne ou de la courroie (8), la suspension à roues (4) en combinaison avec la ligne de transmission (8) décontracte la roue (2) afin d'empêcher la contraction causée par la masse oscillante telles les jambes de celui qui fait de la bicyclette.

2. Bicyclette conformément à la conclusion 1, caractérisée par le fait que la suspension à roues antérieure se compose d'un culbuteur (3) en forme de U comprenant une branche des deux côtés de la roue avant et d'une unité pour amortir le ressort, montée à côté de la roue avant et reliée à l'une des branches.

3. Bicyclette conformément aux conclusions 1 ou 2, caractérisée par le fait qu'au moins un des éléments à ressort se compose d'un ressort de matière synthétique avec une structure de mousse.

4. Bicyclette conformément a la conclusion 3, caractérisée par le fait que la matière synthétique avec une structure de mousse soit du polyuréthane avec une structure cellulaire fermée.
